# EUROPEAN PATENT SPECIFICATION

(11) **EP 3 081 604 B1**
(45) Date of publication and mention of the grant of the patent: **08.01.2020**
(21) Application number: 16165802.6
(22) Date of filing: 18.04.2016
(51) Int. Cl.: C09D 5/18, B32B 27/00, B82Y 30/00, B82Y 40/00

(54) **GRAPHENE-BASED SHEETS, METHOD FOR PREPARING SAID SHEETS, COMPOSITE MATERIAL AND USES OF SAID GRAPHENE-BASED SHEETS**
GRAPHENBASIERTE FOLIEN, VERFAHREN ZUR HERSTELLUNG DIESER FOLIEN, VERBUNDWERKSTOFF UND VERWENDUNGEN DIESER FOLIEN.
FILMS BASÉS SUR DU GRAPHENE, PROCÉDÉ DE PRÉPARATION DE CES FILMS, COMPOSITE ET UTILISATIONS DES FILMS

(30) Priority: 16.04.2015 IT UB20150181
(43) Date of publication of application: 19.10.2016
(73) Proprietor: Nanesa S.r.l., 52100 Arezzo (IT); Efaistos S.r.l., 80048 Sant' Anastasia (NA) (IT)
(72) Inventor: BERTOCCHI, Francesco, 00148 Rome (IT); GIANNINI, Giacomo, 52100 Arezzo (IT); MAIONE, Massimiliano, 80048 Sant Anastasia NA (IT); CRISTIANO, Francesco, 52100 Arezzo (IT)
(74) Representative: Di Giovine, Paolo

(56) References cited:
- WO-A1-2014/144139
- WO-A2-2014/061048
- CN-A- 103 396 653
- US-A1- 2014 134 355
- C.M. HADDEN ET AL: "Mechanical properties of graphene nanoplatelet/carbon fiber/epoxy hybrid composites: Multiscale modeling and experiments", CARBON, vol. 95, 1 December 2015 (2015-12-01), pages 100-112, XP055300476, GB ISSN: 0008-6223, DOI: 10.1016/j.carbon.2015.08.026
- JIACHENG WEI ET AL: "Epoxy/graphene nanocomposites - processing and properties: a review", RSC ADVANCES: AN INTERNATIONAL JOURNAL TO FURTHER THE CHEMICAL SCIENCES, vol. 5, no. 90, 24 August 2015 (2015-08-24), - 24 August 2015 (2015-08-24), pages 73510-73524, XP055300488, GB ISSN: 2046-2069, DOI: 10.1039/C5RA13897C

## Description

### Technical field of the invention

The present invention relates to the development of a method for preparing a graphene-based half-finished product in sheets, for giving multi-functional performances to new or existing components, made of composite material, polymers or other. In particular, the present invention aims at providing, by means of applying graphene-based sheets produced according to the invention, simultaneously a high protection under fire conditions by means of flame ignition delay, decrease in the flow of toxic volatiles and in case self-extinction, an improvement in the electric and thermal conductivity and the mechanical damping of the structure/component or of the material in general, especially for composites with polymeric matrix and polymers. The present invention also relates to the material obtainable with such method.

### State of art

The functionality of several components of a system or a structure very often is limited by the poor resistance of the materials under critical conditions, such as high temperatures, dynamic stresses and fire. Such conditions very often are present contemporarily in the operating envelope of the component by involving a limited use by the stricter condition.

In particular in case of polymers and/or composites with polymeric matrix, widely used in the last years in various industrial fields (aerospace, railway, motor vehicle, supply or building) the *performances* of an element are strictly linked to the resistance of the material or the multifunctional configuration under extreme conditions (flame, dynamic loads and high thermal powers).

One of the main disadvantages of the use of polymeric materials or composites is the intrinsic inflammability thereof and the poor capability to the heat transmission and dissipation. To this, it is added that toxic fumes and gases could be released in high flows during the combustion by causing serious damages, including the loss of human lives and by determining the safety parameters of evacuation plans or, in general, of safety plans. Due to what said, the search for technical solutions to reduce inflammability or flame trigger and to decrease the release of toxic gases during the combustion of polymers and the materials including them is an extremely important technical problem which very often is examined by following two different approaches: a) development of retardants to modify the material behaviour; b) development of new configurations of materials. In the state of art the use of halogenated materials is very widespread to reduce inflammability and the emission of toxic involutes, however these compounds are extremely dangerous for the environment.

On the contrary, in case of dynamic loads or heat dissipation, the most common approaches are linked to a re-engineering of the elements to obtain a greater functionality and service limits by prolonging the life of the component or of the structure in general.

The state of art as reconstructed above shows then the need for providing new methods to provide the increase in all performances simultaneously: reducing the inflammability of materials, the capability thereof of thermal dissipation and the dampening of the mechanical stresses. This in particular way for the polymers or other materials.

### Summary of the invention

The technical problem placed and solved by the present invention is then to provide a material in graphene-based sheets and the related preparation method allowing to obviate the drawbacks mentioned above with reference to the known art.

Such problem is solved by a graphene-based sheet according to claim 1 and a method for the implementation thereof according to claim 8.

Preferred features of the present invention are subject of the depending claims..

Even the methods for preparing the herein described graphene-based sheets and uses thereof are subject of the present invention.

As highlighted by the application examples reported in the experimental section of the present patent application, the herein described material allows: a) strongly reducing the ignition time of the materials and then of the structures of different type; b) reducing the speed for generating toxic involutes; c) improving the heat dissipation by allowing a design of the heat transfer in the most suitable way to the considered component; d) improving considerably the dissipation of the dynamic mechanical stresses to the whole advantage of the functionality and the comfort of the whole structure.

Furthermore, by using the present invention the material/structure to be protected is not modified with the consequent problem of modifying the productive process thereof and evaluating the variations induced to the performances not linked to those of resistance to fire or thermal or dynamic-mechanical (for example mechanical, dilatometric, etc.) ones, but applied to the component to be protected directly onto the surface or in the outermost layers provides a) a protection to fire both in terms of flame delay and decrease in the heat-releasing speed and self-extinction; b) an effective heat dissipation element; c) a high contribution for dampening vibrations or dynamic-mechanical stresses in general.

Other advantages, features and use modes of the present invention will result evident from the following detailed description of some embodiments, shown by way of example and not for limitative purpose.

### Brief description of the figures

The figures of the enclosed drawings will be referred to, wherein:

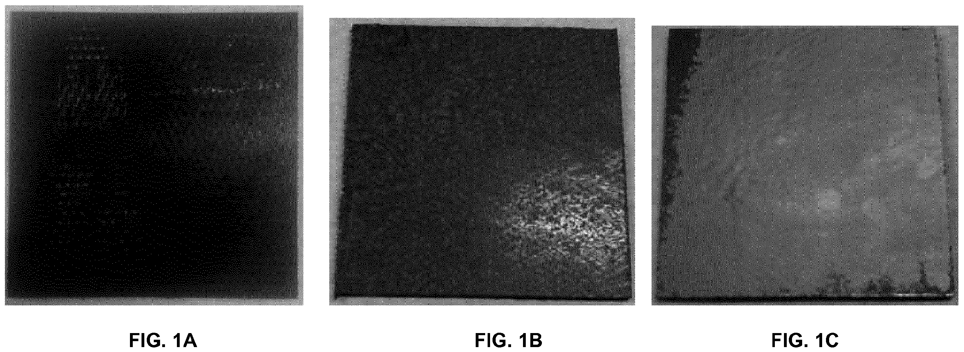

- figure 1A is a photo of a carbon fibre material sample, designated in the experiments as CF1. Figures 1B (CFM15 sample) and 1C (CFM80 sample) are two photos of the sample of figure 1A protected according to a preferred embodiment of the graphene-based sheet of the present invention respectively with a graphene-based sheet of 15 and 80 µm;

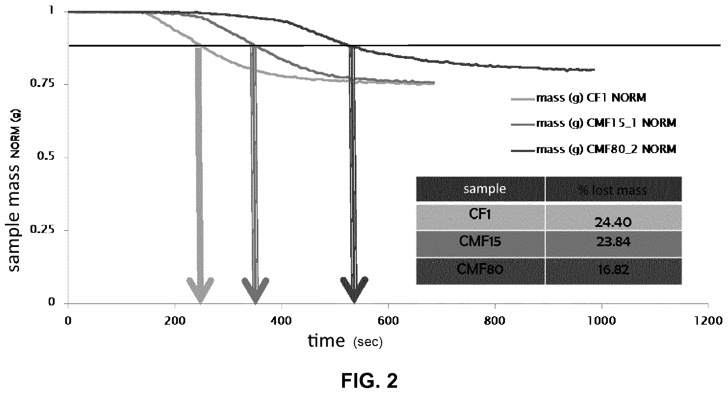

- figure 2 is a graph wherein the results obtained with the samples of figure 1 in the mass loss experiments are shown;

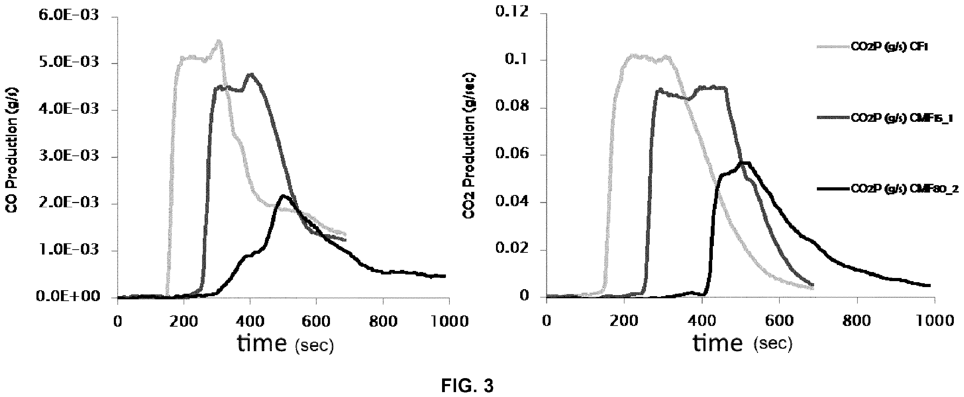

- figure 3 is a graph wherein the measurements of the samples of figure 1 in the experiments of CO and CO₂ emissions are shown;

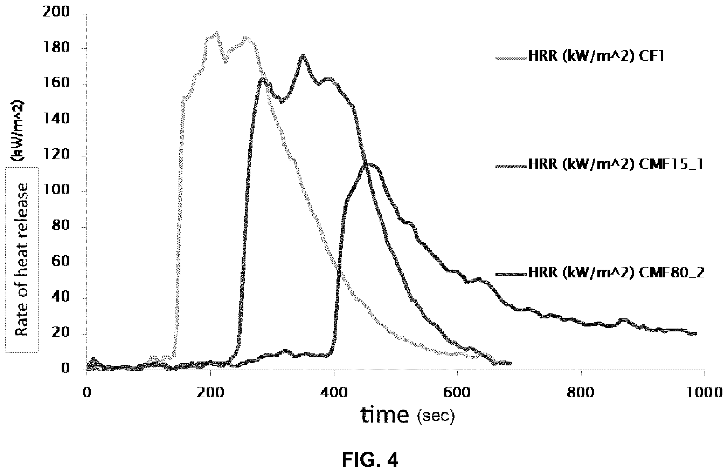

- figure 4 is a graph wherein the heat release rate of the samples of figure 1 is shown.
- figure 5 is a graph wherein the shielding to the electro-magnetic waves of the samples of figure 1 is shown.

### Detailed description of the invention

The present invention relates to a graphene-based sheet and to the related preparation method, the graphene-based sheet according to the present invention gives multi-functional features to a component made of composite material or other material, under flame conditions, high thermal powers and dynamic stresses for new or existing components or structures. According to an embodiment such component could be made of: a) a composite material with polymeric matrix, for example carbon fibres in matrix of epoxy resin; b) a composite system with long-fibre reinforcement and polymeric matrix; c) a layered or single system of a polymer or several polymers; d) a hybrid material with high level of inflammability; e) a traditional (i.e. metallic) material operating under extreme conditions; f) a single component or a structure formed by several components. Such components will be for example the common products used in the industrial fields such as aerospace, railway, motor vehicle, supply or building constructed in the different materials shown above.

The material in sheets implemented according to the present invention is applied on the surface of a component, for example in composite material with polymeric matrix, in form of layer characterized by a specific thickness, properly selected and implemented, inducing the properties described previously by improving the performances to flame, thermal and dynamic-mechanical performance of the material of the whole component/structure.

In the present description under the expression "graphene-based sheet" a sheet is meant comprising or substantially constituted by a specific graphene-based nanomaterial belonging to the family of GRMs (Graphene Related Materials) and identified as packages of graphene layers, that is Nanoplatelets and by a polymeric matrix according to a weight ratio between the two elements comprised between 75:25 and 99:1. The weight percentage of the polymeric matrix in the graphene-based sheet will be comprised between 1% and 25%, preferably it will not exceed 20%. The sheet thickness could be comprised between 10 and 150 µm, preferably it will be at least 80 µm.

The polymeric matrix could be for example polyester, polyurethane, polystyrene, polycarbonate, epoxy resin, mixtures thereof or systems or thermoplastic mixtures.

The graphene-based sheet obtainable according to the method described herein has the following features:
- a density comprised between 1.5 and 2.2 g/cm³;
- a thermal conductivity along the plane of the graphene-based sheet higher than 500 W/mK, in particular comprised between 500 and 2000 W/mK;
- a thermal conductivity measured through the plane of the graphene-based sheet comprised between 10 to 100 W/mK;
- a specific heat comprised between 700 and 1000 J/(kg×K), measured at 25°C;
- a thermal diffusivity comprised between 7 and 20 cm²/s;
- preferably the graphene-based sheet will also have a surface electric resistance equal or higher than 1x10⁻⁴ Ohm/square (Ω/sq).

A subject of the present invention is also a method for preparing graphene-based sheets. The method for preparing graphene-based sheets, subject of the invention, is aimed at obtaining a high level or orientation, alignment and compaction of the nanoplatelets, by arranging them parallelly to the plane of the sheet itself.

As starting material of the method nanoplatelets with a thickness comprised between 5 and 30 nm will be advantageously used, the average surface sizes thereof are comprised between 1 to 200 micron, preferably from 10 to 20 micron with a calculated carbon content greater than 98%, whereas the bulk density varies from a minimum of 0.010 g/cm³ up to 0.050 g/cm³. The nanoplatelets are then mixed with a polymeric matrix according to a ratio comprised between 75:25 and 99:1, preferably 80:20.

The polymeric matrixes can be mixed directly in solid form with the graphene-based powder or diluted, with a suitable solvent such as for example acetone, to form a paste. The polymeric matrix could be for example polyester, polyurethane, polystyrene, polycarbonate, epoxy resin, mixtures thereof or systems or thermoplastic mixtures.

To this purpose, the paste or solid mixture are deposited in very reduced grammage layer, typically lower than 150 g/mq, on anti-adherent supports. The deposition takes place by means of spraying techniques or preferably by means of squeegee and roller spreading.

Such deposition modes are optimized in order to perform a pre-alignment of the nanoplatelets. In this sense the spraying system is studied in advance and optimized in all the parameters thereof to obtain a homogeneous deposition with a high degree of pre-alignment of the Nanoplatelets. The stratification layer and the end thickness of the graphene-based sheets are predefined upstream based upon the parameters: flow range, number of spraying steps (layers), concentration of Nanoplatelets in the dispersion, concentration of the polymer in the dispersion. With the spraying technique and the control of the related parameters, the depositions result to be highly oriented and homogeneous as obtained by means of a growing process by stratification. The alignment level of the Nanoplatelets deposited with the spraying system exceeds abundantly 85% of the deposited graphene.

According to an embodiment the spraying deposition will be performed according to the following parameters:
- Angle of opening of the spraying jet from 1 ° to 170°;
- Tilting with respect to the support from 90° to 5° preferably comprised between 25° and 5°;
   - Jet pressure up to 2 to 100 bar, preferably 20 to 80 bar;
   - Flow speed of 0.1 to 5 l/min.

   The geometry of the spraying nozzles: preferably will be flat spray, solid stream, full cone, hollow cone, fine spray, oval and square.

According to the embodiment the squeegee deposition system was optimized having studied in advance the tilting parameters of the knives, the geometry of the deposition system (height of the lip, tilting and position of the dispenser), the related sliding speed between support and deposition system, in order to obtain a deposition comprising an alignment of the nanoplatelets for at least 75% of the deposited graphene. The deposited material is dried, preferably the evaporation will be performed in time comprised between 60" and 300" at temperature not higher than 100°C, where suitable, and subsequently pressed by means of lamination or press. The lamination or pressing procedure takes place in several steps, preferably from 1 to 5 to increasing loads. The used pressures can be from 1 to 1000 atm in order to maximize the orientation in relation to the thickness and to the used materials. The lamination can take place preferably between sequences of rolling cylinders with decreasing diameter (from cogging mill cylinders with diameter comprised between 40 and 100 cm up to finishing cylinders with diameter comprised between 5 and 40 cm) with increase in the specific pressure applied to the material. Such process usually allows implementing layer of thickness comprised between 10-20 micron. The described sequence is implemented 1 to 10 times by overlapping the single steps onto the previously obtained material in order to obtain the finished sheet with the wished features.

The modulation of the formulation of the materials, of the process parameters and the grammages allows modulating the end properties of increase in resistance to fire, thermal dissipation, dumping property, EMI shielding, barrier effect and mechanical features of the sheets.

The embodiment with polymer as compatabilizer has additional advantages as the polymeric matrix modulates the mechanical features of the graphene-based sheets by making them manoeuvrable, compact, flexible and resistant (*drapability*)*.* The use of polymeric matrixes (binder) further allows:
- making the sheets self-adhesive for the application as protection to fire on different materials, which can be formed in the most suitable geometry for the heat dissipation and the dampening of vibrations;
- making the sheets compatible with the matrix of the compounds in case of the applications to the composite materials with polymeric matrix.

Even the graphene-based sheets obtainable by means of anyone of the embodiments of the method described herein and uses thereof are subject of the invention.

### Example 1 implementation of the CFM15 sample

The composite laminate with carbon fibres and epoxy matrix was implemented in advance by means of infusion technology. The preform is 2x2 twin weave (Tenax G1157 PAN). The infusion was performed at 90°C followed by a double treatment step at 160°C (1.5 hours) and 180°C (1 hour). The epoxy matrix is of aeronautical level (RTM6 Excel). 10x10-cm square samples were extracted for the tests to fire by means of cutting with diamond blade.

The graphene-based sheet with a thickness of 15 µm is implemented starting from *graphene nanoplatelets* with surface sizes comprised between 20 and 50 micron and thickness comprised between 1 and 30 nanometres. The *nanoplatelets* are mixed in solution with RTM6 resins by using acetone as organic solvent. The ratios on the dry product between the usually used two components (Nanoplatelets/Resin) range from 75/25 to 99/1, in the specific example in the ratios 80/20. The so-obtained dispersion is deposited on anti-adherent supports preferably by means of spreading or spraying, even by means of overlapping of several layers. The sample is then made to dry and dehydrated in stove at temperatures comprised between 30 and 50 °C to eliminate the last traces of solvent. Afterwards the sample is pressed, preferably by means of lamination or press.

The graphene-based sheet with 15-micron thickness was applied to the sample by means of hot-unit pressing with the co-curing technique at 180°C (1.5 hours). The adhesion to the sample surface is guaranteed by the not treated minimum resin content, RTM6, included in the sheet itself.

### Example 2 implementation of the CFM80 sample

The composite laminate with carbon fibres and epoxy matrix was implemented in advance by means of infusion technology. The preform is 2x2 twin weave (Tenax G1157 PAN). The infusion was performed at 90°C followed by a double treatment step at 160°C (1.5 hours) and 180°C (1 hour). The epoxy matrix is of aeronautical level (RTM6 Excel). 10x10-cm square samples were extracted for the tests to fire by means of cutting with diamond blade.

The graphene-based sheet 80 µm is implemented starting from graphene nanoplatelets with surface sizes comprised between 20 and 50 micron and thickness comprised between 1 and 30 nanometres. The nanoplatelets are mixed in solution with RTM6 resins by using acetone as organic solvent. The ratios on the usually used two components (Nanoplatelets/Resin) range from 50/50 to 99/1, in the specific example in the ratios 80/20. The so-obtained dispersion is deposited on anti-adherent supports preferably by means of spreading or spraying, even by means of overlapping of several layers. The sample is then made to dry and dehydrated in stove at temperatures comprised between 30 and 50 to eliminate the last traces of solvent. Afterwards the sample is pressed, preferably by means of lamination or press.

The graphene-based sheet with 80-micron thickness was applied to the sample by means of hot-unit pressing with the co-curing technique at 180°C (1.5 hours). The adhesion to the sample surface is guaranteed by the not treated minimum resin content, RTM6, included in the sheet itself.

### Implementation of the CF1 reference sample

The composite laminate with carbon fibres and epoxy matrix was implemented in advance by means of infusion technology. The preform is 2x2 twin weave (Tenax G1157 PAN). The infusion was performed at 90°C followed by a double treatment step at 160°C (1.5 hours) and 180°C (1 hour). The epoxy matrix is of aeronautical level (RTM6 Excel). 10x10-cm square samples were extracted for the tests to fire by means of cutting with diamond blade.

### Test results on a sample of material made of carbon fibre CF1 and on samples of the examples 1 and 2

The tests of the analysed samples were performed by means of cone calorimeter according to the procedure ISO5660-1 -Reaction to fire tests-Heat release, smoke production and mass loss rate-, by obtaining the following measurements:

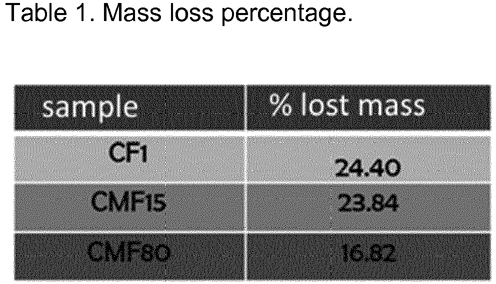

The application of the graphene-based sheet reduces the mass loss effects due to the exposure to flame with respect to the sample in CF1 composite without any treatment.

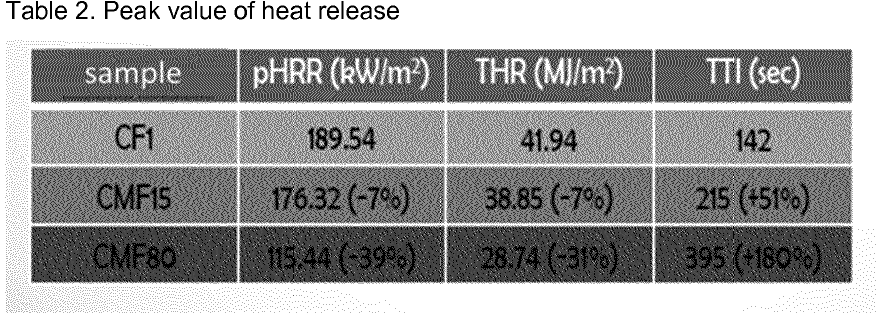

The main effect of the sheet application on the tested composite is represented by a decrease in the flame intensity, PHRR, and a significant delay in the triggering time, TTI, which results to be proportional to the considered thickness. Furthermore, the heat, THR, released by the flame trigger results to be reduced with respect to the not protected sample, the exposure time being equal.

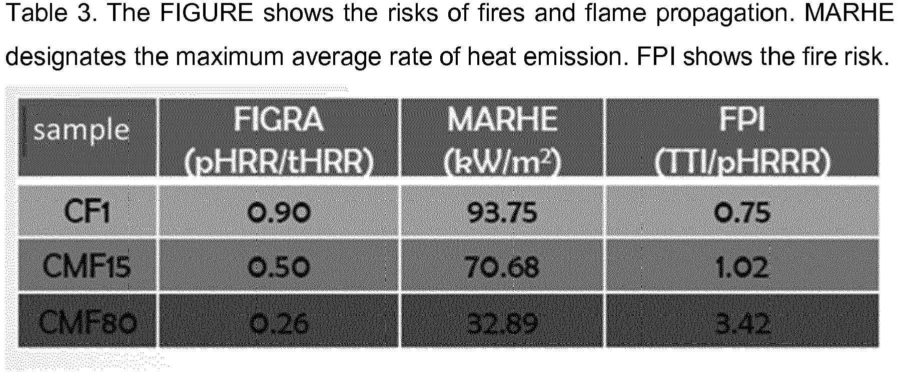

For components thereto the sheet is applied (in the different thicknesses thereof) the fire risk (∼ -70% in case of CMF80) and the potential risk of flame expansion to neighbouring elements, results to be very reduced (--65% nom case of CMF80%).

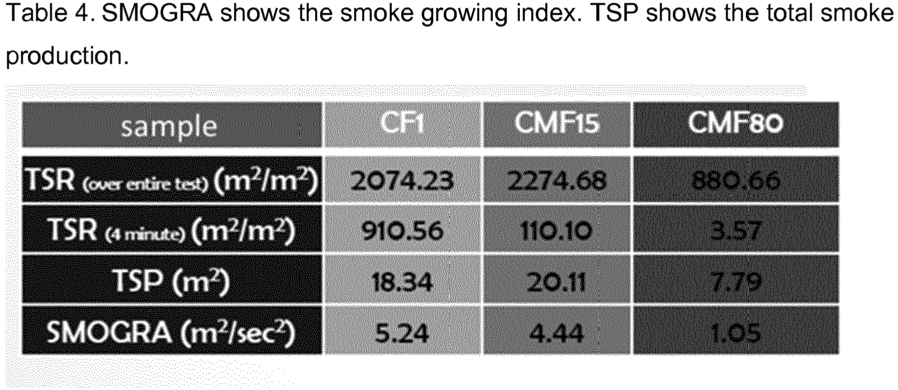

The sheet application and then the trigger decrease with consequent mitigation of the flame overall intensity involves even a decrease in the factors associates to the smoke emission, both on total and partial exposure time. The reduced production of smokes involves a greater time limit for the evacuation plans and the definition of the escape routes.

### IMPLEMENTATION FOR EMI SHIELDING PROPERTIES

The graphene-based sheets used in the preparation of the nanolaminates CFM15 and CFM80 for the antiflame tests (Example 1 and 2) were tested to evaluate the shielding action to the electro-magnetic waves (EMI Shielding).

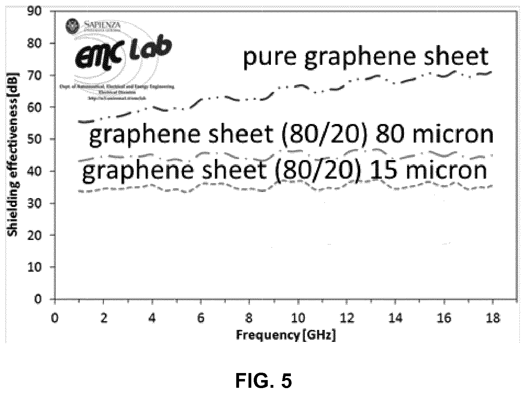

The graphene-based sheet with a thickness of 15 µm is implemented with the same mode described in the Example 1 (implementation of the CFM15 sample). The graphene-based sheet 80 µm is implemented with the same mode described in the Example 2 (implementation of the CFM80 sample). The content of polymer, epoxy resin of aeronautical level (RTM6 Excel), for both graphene-based sheets is equal to 20% by weight. In order to evaluate the electro-magnetic shielding action, a graphene-based sheet was also implemented with a graphene weight content of 100% (without any help of polymer). The graphene-based sheet (100%) with a thickness of 50 µm is implemented starting from graphene nanoplatelets with surface sizes comprised between 20 and 50 micron and thickness comprised between 1 and 30 nanometres. The nanoplatelets are mixed in solution with an organic solvent, preferably acetone. The so-obtained dispersion is deposited on anti-adherent supports preferably by means of spreading or spraying. The sample is then made to dry and dehydrated in stove at temperatures comprised between 30 and 50°C to eliminate the last traces of solvent. Afterwards the sample is pressed, preferably by means of lamination or press with one or more steps with increasing loads. The results of the electro-magnetic shielding tests for the three graphene-based sheets were collected in a single graph (Figure 5) in order to compare and evaluate the differences between the single sheets. The tests were performed in a frequency range comprised between 0.5 and 18 GHz. The pure 50-micron graphene-based sheet has the best SE shield effectiveness level, equal to 60 dB for low frequencies and higher than 70 db at high frequencies. Such values at least can be compared to those obtained from wire nets with micrometric meshes. The presence of polymer in the other two graphene-based sheets and the reduced thickness in case of the 15-micron sheet reduce the SE shielding efficiency with respect to the pure 50-micron graphene-based sheet. However, the possibility of modifying the polymer content and the thicknesses makes possible to implement graphene-based sheets with modular or progressive SE shielding effectiveness, based upon the needs.

## Claims

1. Use of a graphene-based sheet for incrementing the protection to fire and/or the mechanical damping and/or the thermal dissipation of a composite material and/or for shielding against electro-magnetic waves, wherein said graphene-based sheet comprising graphene nanoplatelets in a weight concentration comprised between 75% and 99% and a polymeric matrix in a weight concentration comprised between 1% and 25%, preferably no more than 20%.

2. Use of a graphene-based sheet according to claim 1, wherein the thickness of said sheet is comprised between 10 and 150 µm.

3. Use of a graphene-based sheet according to claim 1 or 2 wherein the thickness of said graphene nanoplatelets is comprised between 5 and 30 nanometres.

4. Use of a graphene-based sheet according to anyone of claims 1 to 3, wherein said polymeric matrix is selected among polyester, polyurethane, polystyrene, polycarbonate, epoxy resin, mixtures thereof or systems or thermoplastic mixtures.

5. Use of a graphene-based sheet according to anyone of claims 1 to 4, wherein said matrix carbon fibres is in epoxy resin matrix.

6. Use of a graphene-based sheet according to anyone of claims 1 to 5, wherein said graphene-based sheet has a surface electric resistance equal or higher than 1x10⁻⁴ Ohm/square (Ω/sq).

7. Use of a graphene-based sheet according to claim 1, wherein the thickness of said sheet is comprised between 80 and 150 µm.

8. A method for preparing graphene-based sheets comprising the following steps:
i) mixing graphene nanoplatelets with a polymeric matrix according to a weight ratio between said graphene nanoplatelets and said polymeric matrix comprised between 75:25 and 99:1 and wherein said nanoplatelets are **characterized by**:
- a carbon content greater than 98%;
- a thickness comprised between 5 and 30 nanometres;
- average surface sizes comprised between 1 and 200 micron;
- a bulk density comprised between 0.010 g/cm³ and 0.050 g/cm³;
ii) depositing by means of spraying or squeegee or roller spreading said mixture obtained at step i);
iii) pressing by means of lamination or press the material deposited with the step ii);
iv) optionally repeating one or more times the previous steps so as to obtain a sheet with the wished grammage.

9. The method according to claim 8 wherein said mixing step takes place in solution, preferably in acetone and the pressing step iii) is preceded by a drying step.

10. The method according to claim 8 or 9 wherein said polymeric matrix is selected among polyester, polyurethane, polystyrene, polycarbonate, epoxy resin, mixtures thereof or systems or thermoplastic mixtures.

11. The method according to anyone of claims 8 to 10 wherein the deposition step ii) is performed by means of spraying by using the following parameters:
• Angle of opening of the spraying jet from 1 ° to 170°;
• Tilting with respect to the support 90° up to 5°, preferably comprised between 25° and 5°;
• Jet pressure up to 2 to 100 bar, preferably 20 to 80 bar;
• Flow speed of 0.1 to 5 l/min.

12. The method according to anyone of claims 8 a 11 wherein the lamination or pressing step is repeated 1 to 5 times to increasing loads by using pressures comprised between 1 a 1000 atm.

13. The method according to the previous claim wherein the lamination is performed with cogging mill cylinders with diameter comprised between 40 and 100 cm and with finishing cylinders with diameter comprised between 5 and 40 cm.

14. A composite material, preferably in carbon fibres with epoxy resin, wherein on the inner or outer surface thereof a graphene-based sheet is applied, wherein said graphene-based sheet comprising graphene nanoplatelets in a weight concentration comprised between 75% and 99% and a polymeric matrix in a weight concentration comprised between 1% and 25%, preferably no more than 20% and wherein the thickness of said sheet is comprised between 80 and 150 µm.

## Patentansprüche

1. Verwendung einer graphenbasierten Schicht zum Erhöhen des Schutzes gegen Feuer und/oder der mechanischen Dämpfung und/oder der Wärmeableitung eines Verbundmaterials und/oder zum Abschirmen gegen elektromagnetische Wellen, wobei die graphenbasierte Schicht Graphen-Nanoplättchen mit einer Gewichtskonzentration zwischen 75 Prozent und 99 Prozent umfasst sowie eine Polymermatrix mit einer Gewichtskonzentration zwischen 1 Prozent und 25 Prozent, vorzugsweise nicht höher als 20 Prozent.

2. Verwendung einer graphenbasierten Schicht nach Anspruch 1, wobei die Dicke der Schicht zwischen 10 und 150 µm liegt.

3. Verwendung einer graphenbasierten Schicht nach Anspruch 1 oder 2, wobei die Dicke der Graphen-Nanoplättchen zwischen 5 und 30 Nanometern liegt.

4. Verwendung einer graphenbasierten Schicht nach einem der Ansprüche 1 bis 3, wobei die Polymermatrix ausgewählt ist aus Polyester, Polyurethan, Polystyren, Polycarbonat, Epoxidharz, Mischungen davon oder Systemen oder thermoplastischen Mischungen.

5. Verwendung einer graphenbasierten Schicht nach einem der Ansprüche 1 bis 4, wobei die Matrixkohlenstofffasern in einer Epoxidharzmatrix vorliegen.

6. Verwendung einer graphenbasierten Schicht nach einem der Ansprüche 1 bis 5, wobei die graphenbasierte Schicht einen elektrischen Oberflächenwiderstand aufweist, der gleich oder größer als 1x10⁻⁴ Ohm/square (Ω/sq) beträgt.

7. Verwendung einer graphenbasierten Schicht nach Anspruch 1, wobei die Dicke der Schicht zwischen 80 und 150 µm liegt.

8. Verfahren zum Herstellen graphenbasierter Schichten mit den folgenden Schritten:
i) Mischen von Graphen-Nanoplättchen mit einer Polymermatrix gemäß einem Gewichtsverhältnis zwischen den Graphen-Nanoplättchen und der Polymermatrix, das zwischen 75:25 und 99:1 liest, und wobei die Nano-Plättchen **gekennzeichnet sind durch**:
- einen Kohlenstoffgehalt von mehr als 98 Prozent;
- eine Dicke zwischen 5 und 30 Nanometern;
- durchschnittliche Oberflächengrößen zwischen 1 und 200 µm;
- eine Festkörperdichte zwischen 0,010 g/cm³ und 0,050 g/cm³;
ii) Aufbringen mittels Sprühen oder Walzen oder Walzverteilung der Mischung, die in Schritt i) erhalten wird;
iii) Drücken mittels Laminierung oder Druckvorrichtung des Materials, das mit Schritt ii) aufgebracht wurde;
iv) optionales einmaliges oder mehrmaliges Wiederholen der vorhergehenden Schritte, um so eine Schicht mit dem erwünschten Flächengewicht zu erhalten.

9. Verfahren nach Anspruch 8, wobei der Mischschritt in Lösung erfolgt, vorzugsweise in Aceton, und dem Druckschritt iii) ein Trocknungsschritt vorhergeht.

10. Verfahren nach Anspruch 8 oder 9, wobei die Polymermatrix ausgewählt ist aus Polyester, Polyurethan, Polystyren, Polycarbonat, Epoxidharz, Mischungen davon oder Systemen oder thermoplastischen Mischungen.

11. Verfahren nach einem der Ansprüche 8 bis 10, wobei der Abscheideschritt ii) mittels Sprühen unter Nutzung der folgenden Parameter ausgeführt wird:
• Öffnungswinkel der Sprühdüse von 1 Grad bis 170 Grad;
• Neigung bezüglich des Trägers von 90 Grad bis 5 Grad, vorzugsweise zwischen 25 Grad und 5 Grad;
• Düsendruck bis 2 zu 100 bar, vorzugsweise 20 bis 80 bar;
• Fließgeschwindigkeit von 0,1 bis 5 l/min.

12. Verfahren nach einem der Ansprüche 8 bis 11, wobei der Laminierungs- oder Druckschritt 1 bis 5 Mal wiederholt wird, um die Ladungen zu erhöhen, durch Nutzung von Drücken zwischen 1 bis 1.000 atm.

13. Verfahren nach dem vorhergehenden Anspruch, wobei die Laminierung mit Blockmühlenzylindern mit einem Durchmesser zwischen 40 und 100 cm und mit Finishing-Zylindern mit Durchmessern zwischen 5 und 40 cm ausgeführt wird.

14. Verbundmaterial, vorzugsweise aus Kohlenstofffasern mit Epoxidharz, wobei auf die innere oder die äußere Oberfläche davon eine graphenbasierte Schicht aufgebracht wird, wobei die graphenbasierte Schicht Graphen-Nanoplättchen mit einer Gewichtskonzentration zwischen 75 Prozent und 99 Prozent umfasst sowie eine Polymermatrix mit einer Gewichtskonzentration zwischen 1 Prozent und 25 Prozent, vorzugsweise nicht höher als 20 Prozent, und wobei die Dicke der Schicht zwischen 80 und 150 µm liegt.

## Revendications

1. Utilisation d'une feuille à base de graphène pour augmenter la protection contre l'incendie et/ou l'amortissement mécanique et/ou la dissipation thermique d'un matériau composite et/ou pour réaliser un blindage contre des ondes électromagnétiques, dans laquelle ladite feuille à base de graphène comprend des nano-plaquettes de graphène à une concentration en poids comprise entre 75 % et 99 % et une matrice polymère à une concentration en poids comprise entre 1 % et 25 %, de préférence non supérieure à 20 %.

2. Utilisation d'une feuille à base de graphène selon la revendication 1, dans laquelle l'épaisseur de ladite feuille est comprise entre 10 et 150 µm.

3. Utilisation d'une feuille à base de graphène selon la revendication 1 ou 2, dans laquelle l'épaisseur desdites nano-plaquettes de graphène est comprise entre 5 et 30 nanomètres.

4. Utilisation d'une feuille à base de graphène selon l'une quelconque des revendications 1 à 3, dans laquelle ladite matrice polymère est choisie parmi un polyester, un polyuréthane, un polystyrène, un polycarbonate, une résine époxy, leurs mélanges, systèmes, et les mélanges thermoplastiques.

5. Utilisation d'une feuille à base de graphène selon l'une quelconque des revendications 1 à 4, dans laquelle lesdites fibres de carbone de matrice sont dans une matrice de résine époxy.

6. Utilisation d'une feuille à base de graphène selon l'une quelconque des revendications 1 à 5, dans laquelle ladite feuille à base de graphène a une résistance électrique de surface égale ou supérieure à 1 x 10⁻⁴ Ohm/carré (Ω/carré).

7. Utilisation d'une feuille à base de graphène selon la revendication 1, dans laquelle l'épaisseur de ladite feuille est comprise entre 80 et 150 µm.

8. Procédé pour préparer des feuilles à base de graphène, comprenant les étapes suivantes :
i) mélange de nanoplaquettes de graphène avec une matrice polymère conformément à un rapport en poids entre lesdites nanoplaquettes de graphène et ladite matrice polymère comprise entre 75/25 et 99/1, lesquelles nanoplaquettes sont **caractérisées par** :
- une teneur en carbone supérieure à 98 % ;
- une épaisseur comprise entre 5 et 30 nanomètres ;
- des tailles de surface moyennes comprises entre 1 et 200 micromètres ;
- une masse volumique apparente comprise entre 0,010 g/cm³ et 0,050 g/cm³ ;
ii) déposition, au moyen d'une pulvérisation ou d'un étalement à la raclette ou au rouleau dudit mélange obtenu dans l'étape i) ;
iii) pressage, au moyen d'une stratification ou d'une presse, du matériau déposé dans l'étape ii) ;
iv) éventuellement répétition une ou plusieurs fois des étapes précédentes de façon que soit obtenue une feuille ayant le grammage souhaité.

9. Procédé selon la revendication 8, dans lequel ladite étape de mélange a lieu en solution, de préférence dans de l'acétone, et l'étape de pressage iii) est précédée d'une étape de séchage.

10. Procédé selon la revendication 8 ou 9, dans lequel ladite matrice polymère est choisie parmi un polyester, un polyuréthane, un polystyrène, un polycarbonate, une résine époxy, leurs mélanges, systèmes, et les mélanges thermoplastiques.

11. Procédé selon l'une quelconque des revendications 8 à 10, dans lequel l'étape de déposition ii) est effectuée au moyen d'une pulvérisation utilisant les paramètres suivants :
• un angle d'ouverture du jet de pulvérisation de 1 ° à 170° ;
• une inclinaison par rapport au support de 90° à 5°, de préférence comprise entre 25° et 5° ;
• une pression du jet de 2 à 100 bar, de préférence de 20 à 80 bar ;
• un débit de 0,1 à 5 l/min.

12. Procédé selon l'une quelconque des revendications 8 à 11, dans lequel l'étape de stratification ou de pressage est répétée 1 à 5 fois pour augmenter les charges par utilisation de pressions comprises entre 1 et 1000 atm.

13. Procédé selon la revendication précédente, dans lequel la stratification est effectuée avec des cylindres de broyage crantés ayant un diamètre compris entre 40 et 100 cm et avec des cylindres de finition ayant un diamètre compris entre 5 et 40 cm.

14. Matériau composite, de préférence en fibres de carbone avec une résine époxy, dans lequel, sur la surface intérieure ou extérieure de celui-ci, est appliquée une feuille à base de graphène, dans lequel ladite feuille à base de graphène comprend des nano-plaquettes de graphène à une concentration en poids comprise entre 75 % et 99 % et une matrice polymère à une concentration en poids comprise entre 1 % et 25 %, de préférence non supérieure à 20 %, et dans lequel l'épaisseur de ladite feuille est comprise entre 80 et 150 µm.
